# NEUE EUROPÄISCHE PATENTSCHRIFT

(11) **EP 1 035 503 B2**
(45) Veröffentlichungstag und Bekanntmachung des Hinweises auf die Entscheidung über den Einspruch: **03.03.2010**
(45) Hinweis auf die Patenterteilung: 20.06.2001
(21) Anmeldenummer: 99101243.6
(22) Anmeldetag: 23.01.1999
(51) Int. Cl.: G06K 19/077

(54) **RFID-Transponder mit bedruckbarer Oberfläche**
RFID-Transponder with printable surface
RFID-Transpondeur avec une surface imprimable

(43) Veröffentlichungstag der Anmeldung: 13.09.2000
(73) Patentinhaber: X-ident technology GmbH, 52355 Düren (DE)
(72) Erfinder: Robertz, Bernd Dr., 52428 Jülich (DE); Liebler, Ralf Dr., 52327 Kreuzau (DE)
(74) Vertreter: Castell, Klaus

(56) Entgegenhaltungen:
- EP-A- 0 158 925
- EP-A- 0 546 675
- EP-A- 0 704 816
- WO-A1-96/36937
- WO-A1-97/01444
- WO-A1-97/26621
- WO-A1-98/39734
- CA-A1- 2 209 652
- DE-A1- 3 902 012
- DE-A1- 4 411 868
- DE-T2- 69 706 280
- DE-T2- 69 803 201
- US-A- 3 078 182
- US-A- 4 428 997
- US-A- 4 783 646
- US-A- 4 903 254
- US-A- 5 294 290
- ZORLL, U.: 'Römpp-Lexikon Lacke u. Druckfarben', 1998, GEORG THIEME VERLAG, STUTTGART, ISBN 3137760011 Seiten 73 - 74
- 'Handbuch der Papier- u. Pappenfabrikation (Papierlexikon)', Bd. 2, teil I-II 1971, DR. MARTIN SÄNDIG OHG, NIEDERWALLUF Seite 138,1422
- 'Stiffened card with integrated circuit' IBM TECHNICAL DISCLOSURE BULLETIN Bd. 28, Nr. 11, April 1986 - April 1986, Seiten 4723 - 4725
- AMES, RONALD M.: 'Radio frequency in the automatic ID marketplace' IEEE 1987 - 1987, Seiten 1231 - 1243
- GEMPLUS: 'Smart cards' 1991 - 1991, CEBIT 1991,
- FINKENZELLER, KLAUS: 'RFID-Handbuch, Grundlagen u. praktische Anwendungen induktiver Funkanlagen, Transponder u. kontaktloser Chipkarten, S. 9, 10, 19, 210', 1998, CARL HANSER VERLAG, MÜNCHEN, WIEN, ISBN 3446193766
- STOECKHERT, K.: 'Kunststoff-Lexikon, 7., neu bearbeitete Auflage', 1981, CARL HANSER VERLAG, MÜNCHEN, WIEN, ISBN 3446130888 Seiten 136 - 137

## Beschreibung

Die Erfindung richtet sich auf direkt bedruckbare und/oder beschreibbare RFID-Transponder, die als Etiketten, Transportgutanhänger, Identifikationskarten, Zutrittsberechtigungskarten verwendbar sind.

Es ist bekannt, Etiketten als fern ablesbare Identifikationsanhänger für Gepäckstücke zu verwenden. Diese weisen beispielsweise ein flexibles Substrat, eine auf dem Substrat gebildete Antenne mit einem Transponderschaltungs-Chip sowie Klebeschichten zum Verbinden von Chip und Antenne im Bereich der Antennenanschlußpunkte und der Chipanschlußpunkte, sowie zwischen dem Transponder, dem Substrat und einer Schutzfolie auf. Ein solches Etikett ist in EP-A-595 549 offenbart.

Aus EP-A-704 816 ist ein RFID-Transponder bekannt, mit Resonanzantenne und damit elektrisch verbundenem Schaltungschip, die auf einer Seite eines flexiblen dielektrischen Trägers, beispielsweise aus Papier oder Kunststoff, angeordnet sind. Der Transponder ist auf der der Antenne gegenüberliegenden Oberfläche des Trägers mit einer Klebstoffschicht versehen, um Befestigung an zu identifizierenden Gegenständen zu ermöglichen. Die Klebstoffschicht ist mit einer abziehbaren Schutzschicht abgedeckt.

Aus DE-A-38 07 936 ist ein elektronisches Diebstahlsicherungssystem bekannt, das mit einer Sendefrequenz im GHz-Bereich-(ca. 2,5 GHz) arbettet, um kleine Abmessungen des passiven Sicherungselementes (passiver Transponder) zu ermöglichen. Das passive Sicherungselement ist mit dem Warenetikett zu einer Einheit verbunden. Dieses aus DE-A-38 07 936 bekannte Sicherungssystem benutzt eine in DE-A-40 02 738 beschriebene ortsfeste Vorrichtung zur Registrierung und Identifizierung von frei beweglichen passiven Funkaufzeichnungschips, die es ermöglichen, gezielt Informationen in einen angesprochenen passiven Funkaufzeichnungschip einzuspeichern und dort gespeicherte Informationen zu einem beliebigen Zeitpunkt abzufragen. Es ist beschrieben, die passiven Registrierchips an Briefen, Päckchen, Paketen oder Gepäckstücken zu befestigen.

US-A-5,294,290 richtet sich auf die Massenherstellung von flexiblen flachen Resonanzschalkreisen, die auf einer Polymerfolie als Träger ausgebildet werden. Das mehrschichtige Laminat weist Abschnitte auf, die mit optisch lesbaren Informationen bedruckbar sind. Das mehrschichtige Laminat weist auch eine mit Trennpapier abgedeckte Haftkleberschicht auf.

Bei den bekannten Etiketten oder Karten mit RFID-Transpondern, die eine Trägerfolie mit darauf angeordneter Antenne und Schaltungschip aufweisen, sind die sogenannten Folientransponder zwischen einem Etikettenobermaterial aus Papier oder einer Kunststoffolie und weiteren Schichten einlaminiert, um Chip und Antenne gegen Beschädigungen zu schützen. Ähnliche Laminatstrukturen sind auch für Eintrittskarten, Fahrkarten, Anhängeetiketten mit RFID-Transpondern bekannt. Diese Laminate sind auf der Vorderseite und gegebenenfalls auch auf der Rückseite mit dafür üblichen Verfahren bedruckbar.

Aufgabe der Erfindung ist es, Etiketten, Transportgutanhänger, Identifikationskarten, Zutrittsberechtigungskarten und dergleichen, die jeweils einen RFID-Transponder mit Antenne und damit verbundenem Schaltungschip aufweisen, im Aufbau zu vereinfachen, so daß eine kostengünstigere Massenherstellung möglich ist.

Diese Aufgabe wird gelöst durch RFID-Transponder mit bedruckbarer Oberfläche, mit einer Polymerfolie als Träger für mindestens eine Antenne und einer mit einer Schutzschicht als Deckschicht abgedeckten Kleberschicht, dadurch gekennzeichnet, daß die bedruckbare Oberfläche als eine auf einer Oberfläche der Polymerfolie teilchenförmiges Pigment und Bindemittel enthaltende Schicht ausgebildet ist, die mit einer Schutzschicht als Deckschicht abgedeckte Kleberschicht auf der der bedruckbaren Oberfläche gegenüberliegenden Oberfläche der Polymerfolie angeordnet ist, die RFID-Transponder jeweils mindestens eine Antenne und einen damit elektrisch verbundenen, auf der Polymerfolie befestigten Schaltungschip aufweisen, die Antenne und der Schaltungschip auf der gleichen Seite der Polymerfolie angeordnet sind und die bedruckbare Oberfläche auf der Oberfläche der Polymerfolie angeornet ist, auf der sich kein Schaltungschip befindet..

Die als Träger geeigneten Polymerfolien können beispielsweise Polyesterfolien. Polyvinylchloridfolien, Polyolefinfolien (Polypropylen, Polyethylen), Polycarbonatfolien, Polystyrolfolien, Polyamidfolien, oder Celluloseacetatfolien sein. Die Trägerfolien haben vorzugsweise eine Dicke von 30 µm bis 820 µm, besonders bevorzugt von 36 um bis 100 µm.
Die Trägerfolien können transparent oder opak sein, und gegebenenfalls eine mikroporöse Struktur aufweisen.

Die Trägerfolien können von sich aus bereits bedruckbar und/oder beschreibbar ausgebildet sein. Zur Ausbildung von flachen, insbesondere rechteckigen RFID-Transpondern ist auf einer Trägerfolie aus Kunststoff ein- oder beidseitig eine Antenne mit ein oder mehreren Windungen aus einem elektrisch leitfähigen Material aufgebracht. Die Antenne wird durch übliche Maßnahmen auf der dielektrischen Polymerträgerfolie ausgebildet. Die Antenne weist Antennenanschlußpunkte auf, die vorzugsweise auf der Trägerfolie so angeordnet sind, daß sie von der Antennenspule umgrenzt sind. Die Antennenwindung(en) hat/haben eine Dicke von 10 µm bis 50 µm.

Der ebenfalls auf der Trägerfolie befestigte Schaltungschip hat erste und zweite elektrische Chipkontaktpunkte vor einem inneren Flächenteil des Chips, und die elektrische Verbindung des Chips mit der Antenne ist vorzugsweise mittels elektrisch leitfähigem Klebstoff hergestellt, der zwischen den Antennenanschlußpunkten und den Chipanschlußpunkten angeordnet ist.
Antenne und Chip auf der gleichen Seite der Polymerfolie angeordnet. Dies ist dann ganz besonders bevorzugt, wenn als Trägerfolie eine von sich aus direkt bedruckbar ausgebildete Polymerfolie verwendet wird.

Die erfindungsgemäße bedruckbare und/oder beschreibbare Schicht wird auf der Oberfläche der Polymerfolie angeordnet, auf der sich kein Chip befindet. Die bedruckbare/beschreibbare Schicht kann opak aber auch semitransparent sein.

Die bedruckbare Schicht enthält feinteilige Pigmente, beispielsweise anorganische Pigmente oder Füllstoffe, wie Kaolin, Calciumcarbonat, Kieselsäure, Silikate, Aluminiumoxid, Aluminiumhydroxid, Zinkoxid, Bariumsulfat, Talk oder Mischungen derselben. Es können aber auch die für Papierbeschichtungen bekannte organischen Polymerpigmente, gegebenenfalls in Kombination mit anorganischen Pigmenten, für die bedruckbare Schicht verwendet werden.

Geeignete filmbildende Bindemittel zum Ausbilden der Schicht und Befestigen der Pigmente an der Trägerfolie sind beispielsweise Polyvinylalkohol, Polyvinylpyrrolidon, Kasein, Stärke, Stärkederivate, Styrol-Maleinsäureanhydrid-Copolymere, aber auch die für Papierbeschichtungen bekannten üblichen Polymerlatices, wie Styrol-Butadiencopolymere, Styrol-Acrylsäurecopolymere, Acryllatices. Es können grundsätzlich auch Mischungen von löslichen Bindemitteln miteinander oder Latices mit löslichen Bindemitteln oder Mischungen von Latices verwendet werden.
Es können auch auf Lösemittel basierende Beschichtungszusammensetzungen, beispielsweise mit Nitrocellulose als Bindemittel zur Ausbildung der bedruckbaren Schicht verwendet werden.

Das Verhältnis von Pigment und Bindemittel wird so gewählt, daß eine ausreichende Haftung der bedruckbaren Schicht an der Polymerfolie sichergestellt ist, jedoch die Schicht noch ausreichend Porosität aufweist, um gut bedruckbar zu sein.
In der Regel reichen 5 bis 30 Gew.Tl., vorzugsweise bis 20 Gew.Tl. Bindemittel pro 100 Gew.Tl. Pigment aus, um eine ausreichend feste bedruckbare und/oder beschreibbare Schicht auszubilden.

Die bedruckbare Schicht kann noch übliche Hilfsmittel, wie Dispergiermittel. Entschäumer, Vernetzungsmittel, Haftvermittler, Verdickungsmittel, Farbstoffe, UV-Stabilisatoren enthalten.

Die bedruckbare Schicht weist vorzugsweise ein Auftragsgewicht (trocken) von 5 g/m² bis 30 g/m², vorzugsweise 7 g/m² bis 20 g/m² auf.

Bei einer Ausführungsform der Erfindung kann zwischen der Trägerfolie und der bedruckbaren Schicht noch eine Zwischenschicht angeordnet sein, die ebenfalls teilchenförmige Pigmente/Füllstoffe und Bindemittel enthält. Die Zwischenschicht erhöht die Opazität der Gesamtschicht auf dieser Seite der Trägerfolie und kann auch isolierende Wirkung gegenüber Wärme oder Sperreigenschaften für migrierende Bestandteile haben. Grundsätzlich können für die Zwischenschicht gleiche filmbildende Bindemittel und Pigmente für die bedruckbare Schicht verwendet werden. Die Zwischenschicht hat vorzugsweise ein Auftragsgewicht (trocken) von 1 g/m² bis 10 g/m². Um die Haftung der Zwischenschicht auf der Polymerfolie zu verbessern, kann die Zwischenschicht auch ein Haftvermittler neben den üblichen Hilfs- und Zusatzstoffen enthalten, oder die Polymerfolie selbst kann eine haftvermittelnde Oberflächenausrüstung aufweisen.

Bei einer Ausführungsform der Erfindung ist die bedruckbare Schicht als wärmeempfindliche Aufzeichnungsschicht ausgebildet. Bei dieser Ausführungsform enthält die bedruckbare Schicht zusätzlich noch Farbstoffvorläuferverbindung(en), die bei Einwirkung von Wärme mit einer geeigneten sauren Verbindung als Reaktionspartner eine Farbe ausbildet (ausbilden) und ein oder mehrere schmelzbare Verbindungen, wie Wachse und übliche Hilfsstoffe. Die schmelzbaren Verbindungen sollen bei Wärmeeinwirkung den Kontakt der Farbe bildenden Reaktionspartner unterstützen.
Bei einer anderen Ausführungsform der Erfindung ist die bedruckbare Schicht als tintenaufnehmende Aufzeichnungsschicht für das Bedrucken mittels Tintenspritzverfahren ausgebildet. Bei dieser Ausführungsform kann die bedruckbare Schicht neben Pigment(en) und Bindemittel(n) vorzugsweise noch ein oder mehrere kationische Verbindungen zur Fixierung der Farbstoffe der wäßrigen/alkoholischen Tinten enthalten. Beispielsweise kationische Acrylate, Acrylamide, Polydiallyl-dimethylamin-Chlorid, Polyallylamine, Polydiallylamine, Polyimide, quaternäre Ammoniumverbindungen und in derartigen Aufzeichnungsschichten übliche weitere Hilfsstoffe.

Die bedruckbare Schicht ist aufgrund der Anwesenheit von feinteiligen Pigmenten und Bindemittel(n) in der Regel auch durch andere, bei unmittelbarem Bedarf (on-demand) ausführbare Druckverfahren, wie Thermotransferdruck, Laserdruck, Magnetographie, Dot-Matrix bedruckbar. Die bedruckbare Schicht ist auch mittels Flexo-, Offset-, Tief-, und Siebdruckverfahren bedruckbar.

Der besondere Vorteil der erfindungsgemäßen direkt bedruckbaren RFID-Transponder besteht darin, daß sie mit kommerziell eingeführten Druckern bei Bedarf unmittelbar bedruckt werden können, um auf der Oberfläche optisch lesbare Informationen auszubilden, die dem gewünschten Anwendungszweck als Etikett, Anhänger, Zutrittsberechtigungskarte, Identifikationskarte entsprechen. Parallel können die gleichen Informationen und/oder zusätzliche Informationen im Schaltungs-Chip in wieder abrufbarer Form gespeichert werden.

Auf der der bedruckbaren Schicht gegenüberliegenden Oberfläche weist die Trägerfolie eine Kleberschicht auf. Die Kleberschicht kann ein Flächengewicht von 3 g/m² bis 30 g/m², vorzugsweise 5 g/m² bis 15 g/m² haben.

Die Kleberschicht kann aus handelsüblichen Heißklebern oder üblichen Kaschierklebern ausgebildet sein, insbesondere wenn die Deckschicht dauerhaft an der Trägerfolie befestigt werden soll. Bei dieser Ausführungsform der Erfindung wird als Deckschicht Papier oder Karton oder eine Kunststoffolie verwendet, um die bedruckbaren RFID-Transponder direkt als Identifikationskarten, Zutrittsberechtigungskarten oder Anhänger verwenden zu können. Das Flächengewicht des Papiers/Kartons für die Deckschicht wird entsprechend der für den Verwendungszweck gewünschten Steifigkeit der Karte ausgewählt. Es kann von 50 g/m² bis 250 g/m², vorzugsweise 70 g/m² bis 120 g/m² betragen.

Bei einer anderen Ausführungsform der Erfindung wird ein selbsthaftender Klebstoff zur Ausbildung der Kleberschicht verwendet.
Geeignete Haftkleber zur Ausbildung einer Haftkleberschicht sind beispielsweise haftklebende wäßrige Dispersionen auf Basis Acrylsäure, Acrylat(ester mit C₄ bis C₈-Alkoholen) und/oder mit Acrylat(ester mit C₄ bis C₈-Alkoholen) und deren Copolymere mit Vinylacetat, Acrylnitril, Diactetonacrylamid und/oder quervernetzte Comonomere (z.B. Divinylbenzol oder Ethylendimethacrylat mit und ohne modifizierende Harzdispersionen (Kohlenwasserstoffharze, Alkylphenolharze, Terpenphenolharze, Beta-Pinenharze, Kollophoniumharze, Methylstyrol-Vinyltoluolharze). Acrylathaftkleber. gelöst in organischen Lösemitteln mit z.B. Kollophoniumtriglycerid- oder hydrierten Kollophoniumharzen als klebrigmachende Komponente, durch Copolymerisation mit bifunktionellen Monomeren, wie Divinylbenzol oder Ethylendimethacrylat oder Copolymerisation mit UV-Fotoinitiatoren (z.B. Benzophenongruppen) derivatisierte Acrylate, strahlenvernetzbare Haftschmelzkleber auf Acrylatbasis, Haftschmelzkleber auf Basis Isobutylen-Isopren, Isobutylen-Butadien oder Ethylen-Butadien oder Blockcopolymeren mit Styrol (SIS-SB-, SBS- und SE/BS Copolymere) unter Zusatz klebrigmachender Harze, z.B. aliphatische Olefinharze, Kollophonium- oder Terpen-Phenolharze oder Polyaromaten. in Benzin gelöste Haftkleber auf Naturkautschukbasis mit Cummaron-Inden-, Kollophonium- oder Kohlenwasserstoffharzen (z.B. Polyterpene oder Poly-Beta-Pinen) als Klebrigmacher.

Die Haftkleberschicht wird mit einer wieder ablösbaren Deckschicht abgedeckt, um die bedruckbaren RFID-Transponder direkt als selbsthaftende Etiketten zum Kennzeichnen von Transportgut, Textilien oder Behältern nach dem Entfernen der Deckschicht verwenden zu können. Derartige ablösbare Deckschichten zum Schutz der Haftkleberschicht bis zur endgültigen Verwendung, können sogenannte Trennpapiere sein, das sind Papiere, die mindestens eine so ausgerüstete Oberfläche aufweisen, so daß bei Kontakt mit dem Haftkleber eine Verbindung ausgebildet wird, die jedoch ohne Beeinträchtigung der Klebwirkung der Haftkleberschicht wieder lösbar ist.

Geeignete Trennpapiere sind solche mit einer Oberflächenschicht auf der Vorderseite, die als Trennmittel enthalten kann: Polymere auf der Basis von Celluloseacetat, (Meth)acrylaten, Acrylnitril, Vinylchlorid, Vinylethern oder deren Copolymeren mit z.B. Maleinsäureanhydrid oder modifiziert mit Aldehyd- oder Iminharzen; Wachse auf der Basis von Polyethylen- oder Polyamiden bzw. deren Mischungen mit Polymeren auf der Basis von Nitrocellulose, Polystyrol oder Vinylchlorid-Vinylacetatcopolymeren; Polyvinylestern mit langkettigen Alkoholen; Chromstearaten und darauf basierenden Derivaten; vernetzten Polyorganosiloxanen, gegebenenfalls in Mischung mit Vinylethern und/oder Maleinsäureanhydridpolymeren.
Siliconhaltige Trennschichten werden aus Lösungen in organischen Lösemitteln oder aus wäßriger Emulsion oder als flüssige Polyorganosiloxane auf ein geeignetes Trägermaterial aufgebracht und anschließend vernetzt. Die Vernetzung kann durch katalysierte Kondensation, durch Additionsreaktion, wie Hydrosilylierung oder mittels UV- oder ESH-Strahlen erfolgen.

Die bedruckbare Schicht, gegebenenfalls die Zwischenschicht und die Kleberschicht, können auf die Trägerfolie mit üblichen dafür bekannten Verfahren aufgebracht werden. Im Falle von Haftkleberschichten, insbesondere dann, wenn diese aus organischen Lösemitteln aufgebracht werden sollen, ist es bevorzugt, Haftkleberschicht auf der mit Trennwirkung.(Abhäsiveigenschaft) versehenen Deckschicht auszubilden und dann die Polymerträgerfolie mit den ausgebildeten RFID-Transpondern in Kontakt mit der Haftkleberschicht zu bringen.

Bei einer Ausführungsform der Erfindung wird ein endloses Polymerfolienband als Träger für die Ausbildung der RFID-Transponder verwendet. Auf dem Band werden in Bandlaufrichtung eine Vielzahl von RFID-Transpondern mit jeweils Antenne und Chip ausgebildet. Es ist auch möglich ein breiteres Folienband zu verwenden und in Bandlaufrichtung parallel zueinander und in geringem Abstand voneinander Reihen mit einer Vielzahl von RFID-Transpondern zu versehen.
Kleberschicht und Deckschicht werden bei diesen Ausführungsformen vorzugsweise durchgehend auf einer der Oberflächen des Polymerfolienbandes befestigt. Bevorzugt werden die RFID-Transponder in Bandlaufrichtung in Abstand voneinander ausgebildet.

Die bedruckbare Schicht auf der gegenüberliegenden Oberfläche der Trägerfolie kann ebenfalls durchgehend ausgebildet sein. Es ist aber auch möglich, die bedruckbare Schicht jeweils nur im Bereich der RFID-Transponder aufzubringen und die Teile des Bandes zwischen den in Bandlaufrichtung in Abstand voneinander angeordneten RFID-Transpondern und gegebenenfalls vorhandenen Reihen von RFID-Transpondern frei von der bedruckbaren Schicht zu belassen.

Diese, jeweils zwischen den RFID-Transpondern unterbrochene Ausbildung der bedruckbaren Schicht hat den Vorteil, daß beim Bedrucken der Schicht Sensoren den Beginn und das Ende des jeweiligen RFID-Transponders im Band erfassen und das Bedrucken der RFID-Transponder passergenau steuern können.
Bei einer Ausführungsform eines endlosen RFID-Transponderbandes ist es bevorzugt, zwischen den RFID-Transpondern quer zur Bandlaufrichtung mindestens eine vorbereitete Trennlinie als Solltrennstelle auszubilden, um das Abtrennen von unbedruckten oder bedruckten RFID-Transpondern vom Band zu erleichtern.

Derartige Solltrennstellen zwischen den bedruckbaren RFID-Transpondern des Bandes können unterschiedlich ausgebildet sein. Beispielsweise können zwischen benachbarten RFID-Transpondern quer zur Bandlaufrichtung Perforierungen in dem Folienband vorhanden sein, die die Solltrennstellen sichtbar machen und das Abtrennen von Einzeleinheiten erleichtern. Wie bereits beschrieben, sind vorzugsweise die einzelnen RFID-Transponder auf der Trägerfolie nicht unmittelbar aneinandergrenzend ausgebildet, sondern vereinzelt, so daß benachbarte RFID-Transponder auf der Trägerfolie in Bandlaufrichtung einen Abstand voneinander aufweisen. Um das Durchtrennen der Trägerfolie an solchen Solltrennstellen zu unterstützen, kann die Deckschicht zusätzlich perforiert sein und/oder Lochungen aufweisen. Eine solche Ausbildung von Solltrennstellen ist besonders bevorzugt, wenn das Folienband Angreifstellen für Bandförderelemente aufweisen und/oder wenn das Folienband zum Stapeln mit Zick-Zack-Faltung konfektioniert werden soll. Derartige Perforierungen haben aber auch Vorteile, wenn das Folienband zu Rollen konfektioniert werden soll.

Bei den Ausführungsformen der bedruckbaren RFID-Transponder in Bandform mit einer Reihe einer Vielzahl von RFID-Transpondern kann die Bandbreite von 45 mm bis 100 mm betragen. Bei schmaleren Bahnen sind die rechteckigen RFID-Transponder in Längsrichtung des Bandes ausgebildet. Breitere Bahnen sind dann erforderlich, wenn die rechteckigen RFID-Transponder quer zur Bandlaufrichtung ausgebildet sind.

Die Bandbreite wird den kommerziellen Druckern, die das Bedrucken von Etiketten oder Zutrittsberechtigungskarten bei Bedarf unmittelbar erledigen, angepaßt.

### Beispiel 1

Es wird ein Folientransponderband aus einer transparenten 48 mm breiten und 36 µm dicken PETP-Folie und beidseitig aufgebrachten Antennenstrukturen aus Aluminium, die in elektrischer Verbindung mit einem auf der Polymerfolie angeordneten Schaltungs-Chip stehen, verwendet, welche Ausführung hier nicht beansprucht ist. Das Folienband wird in einer Ausrüstungsmaschine von der Rolle verarbeitet und mittels einer ersten Gravurwalze eine zur Ausbildung einer wärmeisolierende Zwischenschicht, eine Beschichtungszusammensetzung, die organische Hohlkörperpigmente und übliche filmbildende Bindemittel und Hilfsstoffe enthält, als wäßrige Dispersion aufgetragen. Nach dem Trocknen mit Hilfe von IR-Strahlern wird mit einer zweiten Gravurwalze eine Beschichtungszusammensetzung aufgebracht und eine wärmeempfindliche Schicht ausgebildet, die neben filmbildenden Bindemitteln und Pigment noch Farbbildner und Entwickler enthält. Die bedruckbare Schicht wird passergenau auf die Zwischenschicht aufgebracht und mit einer maximalen Oberflächentemperatur von 55°C getrocknet.
Das Beschichtungsgewicht (trocken) der Zwischenschicht beträgt 3-5, vorzugsweise 5 g/m²; das Auftragsgewicht der wärmeempfindlichen Aufzeichnungsschicht beträgt 5-7, vorzugsweise 7 g/m².
Die Beschichtungsfläche beträgt jeweils 48 mm x 90 mm, und zwischen den einzelnen RFID-Transpondern bleibt ein unbeschichtetes Feld von jeweils 6 mm Länge.

In einer Kaschierstation wird ein vorher mit einem Heißschmelzhaftkleber beschichtetes Silicontrennpapier, als Deckschicht, mit einem Flächengewicht von 67 g/m² zukaschiert. Schließlich wird von der Oberseite, d.h. der bedruckbaren Schicht, jeweils die mit bedruckbarer Schicht versehene Fläche bis auf das als Deckschicht dienende Siliconpapier vorgestanzt und es werden damit quer zur Bandlaufrichtung vorbereitete Solltrennstellen zwischen den einzelnen bedruckbaren RFID-Transpondern ausgebildet.

Das Band wird zu Rollen mit jeweils 200 bedruckbaren RFID-Transpondern, die als direkt bedruckbare Haftklebeetiketten verwendet werden sollen, konfektioniert.
Die direkt mit handelsüblichen Thermodruckern bedruckbaren RFID-Transponder weisen bei Ausbildung von Farbe durch Wärmeeinwirkung einen einwandfreien Kontrast auf, aufgedruckte Barcodes können problemlos gelesen werden. Die 96 x 48 mm großen Haftklebeetiketten können als Etiketten für Transportgut direkt aufgeklebt werden.

Neben dem Barcode können beim Bedrucken durch zusätzliche Einrichtungen jeweils die einzelnen RFID-Transponder mit drahtlos fernablesbaren Informationen versehen werden, wobei neben den optisch lesbaren Informationen auch zusätzliche fernablesbare Informationen in dem Etikett gespeichert sein können.

### Beispiel 2

Ein RFID-Transponder auf einer 48 mm breiten und 96 *µ*m dicken transparenten PETP-Folie und einseitig aufgebrachter Antenne und Chip wird auf der blanken Oberfläche mit einer im Tintenspritzverfahren bedruckbaren Aufzeichnungsschicht versehen. Die Schicht enthält Polyvinylalkohol als filmbildendes Bindemittel und Kieselsäure als Pigment. Als Auftragswerk dient ein Düsenauftragswerk. Das Auftragsgewicht beträgt trocken 9 g/m².

Nach dem Trocknen und Zukaschieren eines mit einem Dispersionshaftkleber beschichteten Siliconpapieres auf der gegenüberliegenden Seite werden D die Etikettengröße von 85 mm x 48 mm und vorbereitete Solltrennstellen durch Schneiden durch die bedruckbare Schicht und die Trägerfolie und den Kleber bis zur Deckschicht zwischen den RFID-Transpondern jeweils quer zur Bandlaufrichtung ausgebildet.

Die als Haftklebeetiketten zu verwendenden direkt mittels Tintenspritzverfahren bedruckbaren RFID-Transponder lassen sich mit handelsüblichen Inkjet-Druckern farbig bedrucken. Gleichzeitig oder anschließend können die gewünschten zusätzlichen Informationen in den Schaltungs-Chip eingegeben und zu einem gewünschten späteren Zeitpunkt wieder von der Ferne abgerufen werden.

Die Etiketten dienen zur Auszeichnung von Büchern und zur Kennzeichnung von Akten und ermöglichen durch Abrufen der gespeicherten Informationen berührungslose Kontrolle von Buch- bzw. Aktenbewegungen innerhalb überwachter Bereiche.

### Beispiel 3

Ein RFID-Transponderband mit einem Aufbau, der dem des in Beispiel 1 verwendeten RFID-Transponderbandes entspricht, mit einer Breite von 48 mm wird zunächst mit einer neutral grau eingefärbten Zwischenschicht auf einer Seite beschichtet Anschließend wird eine bedruckbare Schicht aus Pigment(en) und filmbildenden Bindemittel(n) und üblichen Hilfsstoffen ausgebildet, die bei Laserdruckern übliche Toner annimmt.

Als Auftragsverfahren für die bedruckbare Aufzeichnungsschicht wird Siebdruck verwendet. Es werden passergenau jeweils Felder von 48 mm x 96 mm bedruckt. Das Auftragsgewicht der Zwischenschicht beträgt 6 g/m². der bedruckbaren Toner akzeptierenden Schicht 5 g/m².

Das einseitig beschichtete RFID-Transponderfolienband wird auf der Rückenseite mit einem Kaschierkleber und einer 75 *µ*m dicken weiß-opaken PETP-Folie als Deckschicht versehen. Die bedruckbare Schicht wird partiell mittels Flexodruckverfahren bedruckt.

Nach dem Schneiden auf eine Größe von 48 mm x 96 mm können die so erhaltenen auf der Vorderseite partiell bereits bedruckten RFID-Transponder mittels eines Laserdruckers mit hervorragender Qualität als Eintrittskarten bei Anforderung zusätzlich zur partiellen Bedruckung bedruckt, und gleichzeitig gewünschte fernablesbare Informationen im Schaltungs-Chip gespeichert werden.

### Beispiel 4

Der bandförmige Folien-RFID-Transponder von Beispiel 2 wird auf der blanken Seite mit einer Kaolin als Pigment und Polystyrol/Butadienlatex als Bindemittel enthaltenden bedruckbaren Schicht versehen, auf der anderen Seite mit einer 50 pm weiß-opaken PETP-Folie als Deckschicht mittels Kaschierkleber abgedeckt. Nach dem Schneiden in 86 mm x 48 mm großen Etiketten und Lochen der Etiketten können diese als im Thermotransferverfahren bedruckbare Textilanhängeetiketten verwendet werden. Auch diese Etiketten können zusätzlich zu den im Wärmetransferdruck aufgebrachten optisch lesbaren Informationen mit fern ablesbaren Informationen im Speicherchip versehen werden, so daß eine berührungsfreie Kontrolle des Verbleibs der mit einem solchen Anhängeetikett versehenen Textilien in überwachten Bereichen möglich ist.

## Patentansprüche

1. RFID-Transponder mit bedruckbarer Oberfläche, mit einer Polymerfolie als Träger für mindestens eine Antenne und einer mit einer Schutzschicht als Deckschicht abgedeckten Kleberschicht,
**dadurch gekennzeichnet, dass** die bedruckbare Oberfläche als eine auf einer Oberfläche der Polymerfolie teilchenförmiges Pigment und Bindemittel enthaltende Schicht ausgebildet ist, die mit einer Schutzschicht als Deckschicht abgedeckte Kleberschicht auf der der bedruckbaren Oberfläche gegenüberliegenden Oberfläche der Polymerfolie angeordnet ist, die RFID-Transponder jeweils mindestens eine Antenne und einen damit elektrisch verbundenen, auf der Polymerfolie befestigten Schaltungschip aufweisen, die Antenne und der Schaltungschip auf der gleichen Seite der Polymerfolie angeordnet sind und die bedruckbare Oberfläche auf der Oberfläche der Polymerfolie angeordnet ist, auf der sich kein Schaltungschip befindet.

2. RFID-Transponder nach Anspruch 1, **dadurch gekennzeichnet, daß** ein selbsthaftender Kleber die Kleberschicht bildet und die Schutzschicht ein Trennpapier ist, dessen mindestens eine Oberfläche mit einem Trennmittel ausgerüstet ist, so daß die Schutzschicht an der selbsthaftenden Kleberschicht wieder ablösbar ist.

3. RFID-Transponder nach Anspruch 1, **dadurch gekennzeichnet, daß** ein Heißschmelzkleber, Kaschierkleber die Kleberschicht bildet und die Schutzschicht ein mit der Kleberschicht nicht ablösbar verbundenes Papier/Karton oder Kunststoffolie ist.

4. RFID-Transponder nach einem der Ansprüche 1 bis 3, **dadurch gekennzeichnet, daß** die bedruckbare Schicht als wärmeempfindliche Aufzeichnungsschicht ausgebildet ist, die bei Einwirkung von Wärme ein oder mehrere sichtbare Farben entwickelt.

5. RFID-Transponder nach einem der Ansprüche 1 bis 3, **dadurch gekennzeichnet, daß** die bedruckbare Schicht als Tinten nach dem Spritzverfahren aufnehmende Schicht ausgebildet ist.

6. RFID-Transponder nach einem der Ansprüche 1 bis 3, **dadurch gekennzeichnet, daß** die bedruckbare Schicht als mittels Transferdruck, Laserdruck bedruckbare Schicht ausgebildet ist.

7. RFID-Transponder nach einem der Ansprüche 1 bis 6, **dadurch gekennzeichnet, daß** zwischen der Polymerfolie und bedruckbarer Schicht eine opake Zwischenschicht angeordnet ist.

8. RFID-Transponder nach einem der Ansprüche 1 bis 7, **dadurch gekennzeichnet, daß** die Polymerfolie als Träger ein endloses Polymerfolienband ist, auf dem in Bandlaufrichtung in Abstand voneinander eine Vielzahl von RFID-Transpondern mit jeweils mindestens einer Antenne und einem damit elektrisch verbundenen Schaltungschip ausgebildet sind.

9. RFID-Transponder nach Anspruch 8, **dadurch gekennzeichnet, daß** zwischen den RFID-Transpondern quer zur Bandlaufrichtung mindestens eine vorbereitete Trennlinie als Solltrennstelle ausgebildet ist.

10. Verwendung von RFID-Transpondern nach einem der Ansprüche 1, 2, 4 bis 9 als selbsthaftende Etiketten zum Kennzeichnen von Transportgut, Textilien, Behältern.

11. Verwendung von RFID-Transpondern nach einem der Ansprüche 1, 3, 4 bis 9 als Identifikationskarten, Zutrittsberechtigungskarten.

## Claims

1. An RFID transponder with a printable surface, with a polymer film as the carrier for at least one antenna, and an adhesive layer covered with a protective layer as a cover layer,
**characterised in that** the printable surface is formed as a layer comprising particulate pigment and binder, the layer being disposed on one surface of the polymer film, the adhesive layer, covered with a protective layer as a cover layer, is arranged on the surface of the polymer film that is opposite to the printable surface, the RFID transponders each have at least one antenna and a circuit chip electrically connected thereto, the circuit chip being attached to the polymer film, the antenna and the circuit chip are arranged on the same side of the polymer film, and the printable surface is arranged on the surface of the polymer film on which no circuit chip is located.

2. RFID transponders according to Claim 1, **characterised in that** a self-sticking adhesive forms the adhesive layer and the cover layer is a release paper whose at least one surface is finished with a release agent so that the cover layer is redetachable from the self-sticking adhesive layer.

3. RFID transponders according to Claim 1, **characterised in that** a hot-melt adhesive or laminating adhesive forms the adhesive layer and the cover layer is a paper/card or polymer film joined indetachably to the adhesive layer.

4. RFID transponders according to one of Claims 1 to 3, **characterised in that** the printable layer is designed as a heat-sensitive recording layer which develops one or more visible colours on exposure to heat.

5. RFID transponders according to one of Claims 1 to 3, **characterised in that** the printable layer is designed as an ink-accepting layer in accordance with the inkjet process.

6. RFID transponders according to one of Claims 1 to 3, **characterised in that** the printable layer is designed as a layer printable by means of transfer printing, laser printing.

7. RFID transponders according to one of Claims 1 to 6, **characterised in that** an opaque interlayer is arranged between polymer film and printable layer.

8. RFID transponders according to one of Claims 1 to 7, **characterised in that** the carrier is a continuous polymer film strip on which a large number of RFID transponders each with at least one antenna and circuit chip electrically connected thereto are formed at a distance from one another in the running direction of the strip.

9. RFID transponders according to Claim 8, **characterised in that** at least one pre-prepared parting line is formed as an intended separation point between the RFID transponders transversely to the running direction of the strip.

10. Use of RFID transponders according to one of Claims 1, 2 and 4 to 9 as self-adhesive labels for labelling goods for transportation, textiles or containers.

11. Use of RFID transponders according to one of Claims 1, 3 and 4 to 9 as identification cards or access authorisation cards.

## Revendications

1. Transpondeur RFID avec une surface imprimable, avec un film de polymère servant de support pour au moins une antenne et une couche d'adhésif recouverte d'une couche de protection comme couche de revêtement,
**caractérisé en ce que** la surface imprimable est conçue comme une couche contenant du pigment et du diluant sous forme de particules sur une surface du film de polymère, la couche d'adhésif recouverte d'une couche de protection comme couche de revêtement étant disposée sur la surface, opposée à la surface imprimable, du film de polymère, les transpondeurs RFID présentant chacun au moins une antenne et une puce de circuit reliée électriquement à celle-ci et fixée sur le film de polymère, l'antenne et la puce de circuit étant disposées sur le même côté du film de polymère et la surface imprimable sur la surface du film de polymère sur laquelle il n'y a pas de puce de circuit.

2. Transpondeur RFID selon la revendication 1, **caractérisé en ce que** la couche adhésive est formée par une colle auto-adhésive et que la couche de protection est un papier de séparation dont au moins une surface est munie d'un agent de séparation de façon que la couche de protection est apte à être détachée de la couche de colle auto-adhésive.

3. Transpondeur RFID selon la revendication 1, **caractérisé en ce que** la couche adhésive est formée par une colle thermofusible, colle de contrecollage et **en ce que** la couche de protection est un papier/carton ou un film plastique lié de manière non détachable à la couche adhésive.

4. Transpondeur RFID selon l'une des revendications 1 à 3, **caractérisé en ce que** la couche imprimable est réalisée sous la forme d'une couche d'enregistrement thermosensible qui développe une ou plusieurs couleurs visibles sous l'effet de la chaleur.

5. Transpondeur RFID selon l'une des revendications 1 à 3, **caractérisé en ce que** la couche imprimable est réalisée sous la forme d'une couche absorbant de l'encre selon le procédé à jet d'encre.

6. Transpondeur RFID selon l'une des revendications 1 à 3, **caractérisé en ce que** la couche imprimable est réalisée sous la forme d'une couche imprimable par transfert thermique, impression laser.

7. Transpondeur RFID selon l'une des revendications 1 à 6, **caractérisé en ce qu'**une couche intermédiaire opaque est disposée entre le film de polymère et la couche imprimable.

8. Transpondeur RFID selon l'une des revendications 1 à 7, **caractérisé en ce que** le film de polymère servant de support est une bande sans fin de film de polymère sur laquelle une pluralité de transpondeurs RFID avec chacun au moins une antenne et, reliée électriquement à celle-ci, une puce de circuit sont formés à une certaine distance les uns des autres dans le sens de défilement de la bande.

9. Transpondeur RFID selon la revendication 8, **caractérisé en ce qu'**au moins un trait de séparation préparé d'avance est formé entre les transpondeurs RFID, perpendiculairement au sens de défilement de la bande, pour servir d'emplacement de séparation théorique.

10. Utilisation de transpondeurs RFID selon l'une des revendications 1, 2, 4 à 9 comme étiquettes autocollantes pour le marquage de marchandises transportées, textiles, conteneurs.

11. Utilisation de transpondeurs RFID selon l'une des revendications 1, 3, 4 à 9 comme cartes d'identification, cartes d'autorisation d'accès.
